(19) Europäisches Patentamt
European Patent Office
Office européen des brevets

(11) **EP 2 135 050 B1**

(12) **FASCICULE DE BREVET EUROPEEN**

(45) Date de publication et mention
de la délivrance du brevet:
**26.12.2012 Bulletin 2012/52**

(51) Int Cl.:
***G01K 11/00*** *(2006.01)*

(21) Numéro de dépôt: **08787939.1**

(22) Date de dépôt: **11.04.2008**

(86) Numéro de dépôt international:
**PCT/FR2008/000504**

(87) Numéro de publication internationale:
**WO 2008/142283 (27.11.2008 Gazette 2008/48)**

(54) **THERMOMETRE RADIOMETRIQUE**

RADIOMETRISCHES THERMOMETER

RADIOMETRIC THERMOMETER

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **12.04.2007 PCT/FR2007/370007**

(43) Date de publication de la demande:
**23.12.2009 Bulletin 2009/52**

(73) Titulaire: **UNIVERSITE DES SCIENCES ET
TECHNOLOGIES DE LILLE
59655 Villeneuve-d'Ascq Cedex (FR)**

(72) Inventeurs:
• **VAN DE VELDE, Jean-Claude
F-59130 Lambersart (FR)**
• **CONSTANT, Eugène
F-59650 Villeneuve-d'Ascq (FR)**
• **JONNIAU, Sylvain
F-59100 Roubaix (FR)**
• **RINGOT, Roger
F-59274 Marquillies (FR)**

(74) Mandataire: **Matkowska, Franck
Matkowska & Associés
9, rue Jacques Prévert
59650 Villeneuve d'Ascq (FR)**

(56) Documents cités:
**EP-A1- 0 158 690      JP-A- 56 108 947**

**Description**

**Domaine technique**

La présente invention concerne la mesure de température d'un corps par détection du rayonnement émis par ce corps, au moyen d'un nouveau thermomètre radiométrique. Elle trouve de préférence, mais non exclusivement, son application à la mesure non invasive de la température de tissus biologiques, et notamment à la mesure de la température d'un corps humain.

**Art antérieur**

Il existe à ce jour différents types de radiomètres, qui sont utilisés pour mesurer à distance la température d'une région, et par exemple la température moyenne des tissus biologiques d'un corps humain, par détection de la puissance de bruit thermique émise par cette région. Ces thermomètres radiométriques comportent un capteur d'ondes hyperfréquences ou microondes (généralement dans le domaine 0,5 à 20 GHz), tel que par exemple une antenne ou une sonde. à titre d'example, voir le document EP0158690.

Ce capteur, désigné dans le présent texte, «capteur de microondes », délivre un signal de sortie dont la puissance est fonction de ladite température. Ce signal de sortie est traité par des moyens électroniques qui comportent généralement un détecteur de puissance fonctionnant dans sa zone quadratique, afin de délivrer une grandeur électrique directement proportionnelle à la puissance du signal, et donc à la température.

La sensibilité moyenne d'un tel détecteur de puissance est dans le meilleur des cas de -60 dBm, ce qui en pratique nécessite de mettre en oeuvre une très forte amplification (en pratique une amplification d'au moins 80dB). Il en résulte des risques d'oscillations importants, et ce type de solution technique implique des coûts de réalisation élevés, qui la rendent incompatible pour une application grand public.

**Objectifs de l'invention**

La présente invention vise à proposer un nouveau thermomètre radiométrique dont le coût de fabrication est faible, et qui est de ce fait adapté à des applications grand public.

**Résumé de l'invention**

Le thermomètre radiométrique de l'invention comporte un capteur de microondes et des moyens électroniques de traitement du signal électrique délivré par ledit capteur. Lesdits moyens électroniques comportent :

- des moyens de préamplification du signal électrique délivré par le capteur de microondes,
- des moyens d'amplification à gain variable et à commande automatique de gain, qui permettent l'amplification du signal délivré par les moyens de préamplification, lesdits moyens d'amplification comportant un signal de commande automatique de gain qui permet l'ajustement automatique du gain à partir du signal de sortie des moyens d'amplification, et
- des moyens électroniques de mesure de température permettant une mesure de température à partir dudit signal de commande automatique de gain.

Le gain des moyens de préamplification du thermomètre radiométrique de l'invention est suffisamment élevé pour que la puissance du signal à l'entrée des moyens d'amplification à gain variable soit toujours trop importante et fasse systématiquement réagir la commande de gain automatique en diminuant le gain des moyens d'amplification à gain variable. Ainsi, lorsqu'un rayonnement électromagnétique est détecté par lé capteur de microondes, le signal de commande automatique de gain varie en sorte d'ajuster automatiquement le gain des moyens d'amplification à gain variable. L'invention repose sur le constat nouveau que cette variation du signal de commande automatique de gain est en première approximation proportionnelle à la variation de puissance du signal délivré par le capteur de micro-ondes, et de ce fait peut être avantageusement utilisée pour mesurer la température du corps ou de la région ayant émis le rayonnement.

Plus particulièrement, et de manière facultative selon l'invention, le thermomètre radiométrique de l'invention met en oeuvre les caractéristiques additionnelles et facultatives des revendications 2 à 15, prises isolément ou en combinaison les unes avec les autres.

Les caractéristiques des revendications 3 à 9 et les caractéristiques de la revendication 15 peuvent également avantageusement être mises en oeuvre dans tout type de radiomètre thermique connu, indépendamment des caractéristiques techniques principales de la revendication 1, et ne sont pas dans ce cas combinées à la mise en oeuvre d'une commande automatique de gain et à l'utilisation du signal de commande automatique de gain pour la mesure de température.

L'invention a également pour objet l'utilisation du thermomètre radiométrique visé précédemment, pour mesurer de manière non invasive la température de tissus biologiques, et notamment la température d'un corps humain.

Un autre objet de l'invention est constitué par une source de bruit thermique à faible inertie thermique, destinée à être mise en oeuvre dans un thermomètre radiométrique, quelle que soit la structure de ce thermomètre radiométrique, et comportant l'une et /ou l'autre des caractéristiques des revendications 3 à 9 ou de la revendication 15.

**Brève description des dessins**

D'autres caractéristiques et avantages de l'invention apparaîtront plus clairement à la lecture de la description détaillée ci-après de plusieurs variantes préférées de réalisation de l'invention, laquelle description est donnée à titre d'exemple non limitatif et non exhaustif de l'invention, et en référence aux dessins annexés sur lesquels :

- la figure 1 est un schéma synoptique d'une première variante de réalisation d'un thermomètre radiométrique de l'invention,
- la figure 2 est une représentation en perspective d'une charge résistive à faible inertie thermique pouvant avantageusement être mise en oeuvre dans un thermomètre radiométrique de l'invention, pour constituer une source de bruit thermique,

- la figure 3 est un schéma synoptique d'une deuxième variante de réalisation d'un thermomètre radiométrique de l'invention,
- la figure 4 est une vue de dessus d'une charge résistive adaptée pour la deuxième variante de réalisation de la figure 3,
- et la figure 5 est une vue de côté de la charge résistive de la figure 4.

**Description détaillée**

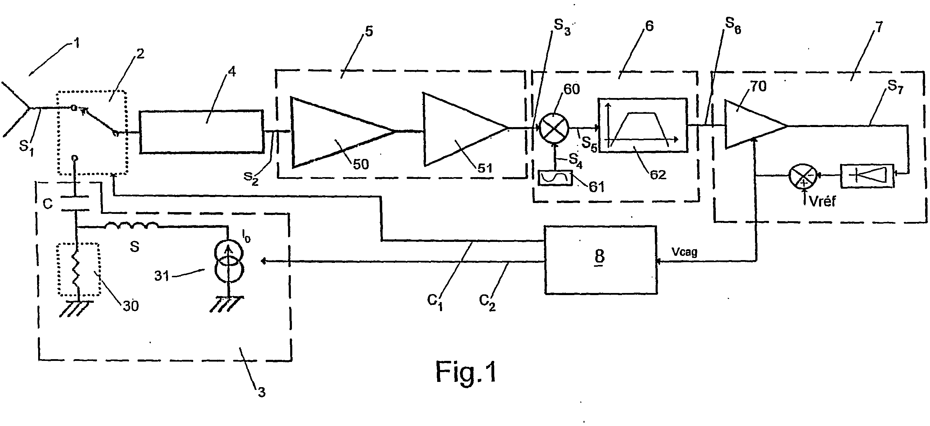

En référence à la figure 1, on a représenté un exemple de thermomètre radiométrique conforme à l'invention, et permettant de mesurer de manière non invasive la température moyenne d'un corps, à partir du rayonnement électromagnétique microonde émis par ledit corps.

Structure du thermomètre radiométrique

Ce thermomètre radiométrique comporte une antenne 1 permettant de capter ledit rayonnement électromagnétique microonde. Cette antenne 1 pourrait également être remplacée par une sonde. L'antenne 1 délivre un signal électrique de sortie S1, dont la puissance P est fonction de la température du corps ayant émis le rayonnement électromagnétique capté par l'antenne.

Ce signal de sortie S1 est traité par des moyens électroniques, qui sont spécifiques de l'invention, et dont une variante de réalisation va à présent être détaillée en référence à figure 1.

Ces moyens électroniques comportent :

- une source de bruit thermique blanc gaussien 3,
- une ligne unidirectionnelle 4,
- un commutateur 2 à deux positions permettant de relier la ligne unidirectionnelle 4 soit à la sortie de l'antenne 1, soit à la source de bruit thermique 3,
- des moyens de préamplification 5 du signal électrique S2 transitant par la ligne unidirectionnelle 4,
- des moyens 6 de type superhétérodyne, permettant une transposition de fréquences du signal préamplifié S3 et délivrant un signal S6,
- des moyens d'amplification 7 à gain variable et à commande automatique de gain, pour l'amplification du signal S6,
- une unité électronique de traitement et de commande 8, qui permet d'effectuer une mesure automatique de température à partir du signal continu de commande automatique de gain (Vcag) des moyens d'amplification 7, et qui délivre en sortie deux signaux électriques de commande C1 et C2.

Le couplage de l'antenne 1 avec le corps sous investigation dont on souhaite mesurer la température peut se faire directement au contact avec le matériau constitutif dudit corps, afin de mieux s'affranchir des rayonnements parasites. De ce fait l'antenne 1 peut être du type « strip-slot » et ses dimensions sont optimisées non seulement en fonction de la fréquence de travail, mais également en fonction de la nature du matériau sous investigation (homogène ou stratifié) de façon à rendre le coefficient de réflexion antenne-matériau le plus faible possible. L'antenne 1 est de préférence réalisée sur un matériau à faibles pertes diélectriques (par exemple verre époxy type FR4, kapton), afin de minimiser l'incidence de la température physique de l'antenne. En outre sa masse thermique est de préférence la plus faible possible pour minimiser le gradient thermique antenne-matériau, et le temps d'équilibre thermique antenne-corps sous investigation.

Le couplage de l'antenne 1 avec le corps sous investigation peut également se faire sans contact .Cela nécessite d'effectuer la mesure dans une enceinte métallique fermée avec une antenne adaptée à l'espace libre.

Le commutateur 2 est commandé par l'unité électronique 8 au moyen du signal de commande C1, et peut indifféremment selon l'invention être réalisé avec des composants actifs (FET, diodes PIN) ou passifs tels que des microsystèmes électromécaniques. On utilise de préférence un commutateur hyperfréquence SP2T, de telle sorte que le commutateur voie rigoureusement la même charge durant les phases 1 et 2 décrites ci-après, ce qui contribue à diminuer les risques d'erreurs occasionnées par les variations d'adaptation, ainsi que les erreurs occasionnées par des variations de coefficient de transmission.

La source de bruit thermique 3 comporte principalement une charge résistive 30 à faible inertie thermique, associée à un générateur de courant 31 qui est commandé par l'unité électronique 8 au moyen du signal de commande C2. Afin bien isoler la partie hyperfréquence du continu lorsque la source de courant 31 débite dans la charge 30, le couplage de la source de bruit thermique 3 avec le commutateur est réalisé l'aide d'un T de polarisation constitué d'une self S et d'une capacité C.

La commande du commutateur 2 et de la source de bruit thermique 3 par l'unité électronique 8, ainsi qu'un exemple préféré de réalisation de la charge 30 seront détaillés ultérieurement.

Dans l'exemple particulier de réalisation de la figure 1, les moyens de préamplification 5 comportent deux amplificateurs faible bruit 50, 51 en cascade. Ceci n'est pas limitatif de l'invention. Dans une autre variante de réalisation, ces moyens de préamplification 5 pourraient comporter un unique amplificateur faible bruit ou plus de deux amplificateurs faible bruit en cascade.

La transposition de fréquences du signal de sortie S3 délivré par les moyens de préamplification 5, vers des fréquences intermédiaires plus basses et avantageusement plus faciles à traiter, est obtenue en effectuant, au moyen d'un mélangeur 60, le produit de ce signal S3 avec un signal sinusoïdal S4 de fréquence fixe F prédéfinie délivré par un oscillateur local 61 verrouillé en phase (typiquement PLL). Un signal S6 à fréquences intermédiaires (FI) plus basses est obtenu après filtrage du signal S5 en sortie du mélangeur 60, au moyen d'un filtre passe-bande 62 de bande passante ΔF prédéfinie.

Le choix de la fréquence F dépend de l'application visée pour le thermomètre radiométrique, et notamment de la permittivité du matériau dont on souhaite mesurer la température et de la profondeur d'investigation souhaitée dans ce matériau pour la mesure de température. Elle sera donc fixée judicieusement par homme du métier au cas par cas en fonction de l'application visée.

A titre d'exemple, une fréquence F de l'ordre de 1,575GHz est un bon compromis pour la mesure de la température des tissus biologiques d'un corps humain sur une profondeur d'investigation de l'ordre de 2cm.

La puissance P du signal S6 en sortie du filtre passe bande 62 est reliée à la température du corps ayant émis le rayonnement électromagnétique par la relation suivante :

$$(1) \quad P = k.T.\Delta F$$

Avec:

k : constante de Boltzmann,
ΔF : bande passante du filtre 62

Pour que la mesure de température ne soit pas perturbée par d'autres fréquences parasites, la bande passante ΔF du filtre 62 doit de préférence être la plus faible possible. On choisira par exemple une bande passante de 2Mhz (par exemple : fréquence basse du filtre 62 égale à 4MHz ; fréquence haute du filtre 62 égale à 6MHz).

Les moyens d'amplification 7 à gain variable et à commande automatique de gain comportent un amplificateur 70 à gain variable (G2), présentant une grande dynamique de gain (par exemple de l'ordre de 60dB). Cet amplificateur 70 est de préférence un amplificateur logarithmique à gain variable.

Le gain G2 de cet amplificateur 70 est ajusté automatiquement par un signal continu de commande automatique de gain (Vcag), qui est obtenu de manière connue en soi à partir du signal de sortie S7 de amplificateur 70 et d'une tension de consigne (Vref). Cette régulation automatique de gain permet de maintenir en sortie de la chaîne d'amplification un niveau de signal S7, fixé par la consigne Vref, et indépendant du niveau du signal S6 appliqué à son entrée.

Pour réaliser à faible coût la chaîne de traitement électronique constituée par le deuxième amplificateur faible bruit 51, les moyens de transposition de fréquence 6, et les moyens d'amplification 7 à gain variable et à commande automatique de gain, on peut utiliser de manière avantageuse un composant standard du marché, tel que le composant GPS commercialisé par la société MAXIM INTEGRATED PRODUCTS, sous la référence « MAX2745 ».

Le gain G1 des moyens de préamplification 5 à la fréquence précitée F est fixé à une valeur suffisamment élevée pour qu'une variation minimum de température que l'on souhaite pouvoir détecter (par exemple ΔT égale 1 °C) se traduise par une variation de la puissance d'entrée du signal S6 faisant réagir la commande automatique de gain (diminution automatique du gain G2 pour maintenir le signal S7 à un niveau fixé par la consigne Vref).

Dans ces conditions, le signal de commande automatique de gain Vcag est en première approximation proportionnel à la la puissance du signal vu par l'antenne 1, et de ce fait à la température Tx du corps ayant émis le rayonnement électromagnétique capté par l'antenne 1. Ce signal (Vcag) de commande automatique de gain peut ainsi être avantageusement utilisé pour la mesure de température du corps ayant émis le rayonnement électromagnétique capté par l'antenne 1.

Dans la variante de réalisation de la figure 1, ce traitement du signal (Vcag) pour la mesure de température est assuré par l'unité électronique 8.

Cette unité électronique 8 de traitement et de commande est de préférence une unité électronique programmée, comportant par exemple un microprocesseur ou un microcontrôleur apte à exécuter un programme de mesure de température implanté dans une mémoire. Elle peut néanmoins également être réalisée au moyen d'un circuit électronique spécifique de type ASIC, FPGA, ...

Quelle que soit son architecture, cette unité électronique 8 de traitement et de commande est conçue pour effectuer une mesure de température, en générant les signaux de commande C1 et C2 du commutateur 2 et du générateur de courant 3, selon une séquence prédéfinie comportant les trois phases successives décrites ci-après.

Phase 0 :

L'unité électronique 8 commande le commutateur 2 au moyen du signal C1 en sorte de relier la sortie de l'antenne 1 servant à capter le rayonnement électromagnétique émis par le corps sous investigation à la ligne unidirectionnelle 4 du thermomètre radiométrique.

Tel que précédemment expliqué, le signal Vcag de commande automatique de gain est proportionnel à la température Tx du corps sous investigation, émettant le rayonnement électromagnétique capté par l'antenne. Ce signal Vcag s'apparente à un bruit blanc gaussien de valeur moyenne non nulle, proportionnelle à Tx, et d'écart type donné.

Ce signal Vcag est échantillonné par l'unité électronique 8 à une fréquence d'échantillonnage prédéfinie Fe (par exemple 1 kHz) pendant une durée t0 prédéfinie (durée de la phase 0), puis est converti numériquement et est sauvegardé en mémoire en vue d'être traité ultérieurement. Les valeurs numériques de ce signal Vcag pendant la phase 0 seront désignées $V_{x,i}$

Phase 1 :

L'unité électronique 8 commande le commutateur 2 au moyen du signal C1, en sorte de le faire basculer dans l'autre position, c'est-à-dire de telle sorte que la ligne unidirectionnelle 4 du thermomètre radiométrique soit à présent reliée à la charge 30 portée à une température T1, ce qui a pour conséquence de générer un signal Vcag.

Cette température T1 est connue et mesurée à l'aide d'un capteur de température électronique situé au plus près la résistance 30, de la ligne unidirectionnelle 4, et du commutateur 2, ceci afin de minimiser les gradients de température entre ces composants.

Le signal Vcag pendant cette phase 2 s'apparente à un bruit blanc gaussien de valeur moyenne non nulle, proportionnelle à la température T1, et d'écart type donné.

Ce signal est échantillonné à la fréquence Fe pendant une durée t1 prédéfinie (durée de la phase 1), puis est converti numériquement et est sauvegardé en mémoire en vue d'être traité ultérieurement. Les valeurs numériques de ce signal Vcag pendant la phase 1 seront désignées $V_{1,i}$

Phase 2 :

Durant toute cette phase, l'unité électronique 8 commande le générateur de courant 31 au moyen du signal de commande C1. Il en résulte que ce générateur 31 débite dans la charge 30 un courant continu d'intensité constante I0, qui permet à la charge 30 de dissiper une puissance électrique constante et de la porter à une température T2=T1+ΔT.

La variation de température ΔT est connue, et dépend des caractéristiques intrinsèques de la charge 30 et-de l'intensité 10 du courant. Par exemple, lorsque la charge 30 est constituée par une résistance de valeur R1 réalisée sur un substrat, la variation de température ΔT est donnée par la relation suivante :

$$(2) \qquad \Delta T = Rth.R1.I0^2$$

Rth: résistance thermique du substrat sur lequel est réalisé la résistance
R1 : résistance en ohms
I0 : Intensité du courant en mA

La charge résistive 30 est dimensionnée pour un courant d'intensité I0 donné de telle sorte que la différence de température $\Delta T$ entre les températures de référence T1 et T2 soit supérieure à une valeur minimale prédéfinie, qui dépend de l'application visée pour le thermomètre radiométrique.

Pendant la phase 2, on obtient comme précédemment un signal Vcag qui s'apparente à un bruit blanc gaussien de valeur moyenne non nulle, proportionnelle à la température T2, et d'écart type donné. Ce signal est échantillonné à la fréquence Fe pendant une durée t2 prédéfinie (durée de la phase 3), puis est converti numériquement et est sauvegardé en mémoire en vue d'être traité ultérieurement. Les valeurs numériques de ce signal Vcag pendant la phase 2 seront désignées $V_{2,i}$

Calcul de la température

A l'issue des trois phases précitées, l'unité électronique 8 calcule dans un premier temps :

- une valeur VX à partir des échantillons $V_{x,i}$ ,
- une valeur V1 à partir des échantillons $V_{1,i}$,
- une valeur V2 à partir des échantillons $V_{2,i}$,

puis dans un deuxième temps calcule la température Tx du corps sous investigation en utilisant la formule suivante :

$$(3) \qquad Tx = T1 + \Delta T.(VX-V1)/(VX-V2)$$

Pour l'application de cette formule (3), on considère que les mesures pendant les phases 0, 1 et 2 précitées ont été faites suffisamment rapidement pour qu'entre chacune des phases 0 à 2, on puisse considérer que le gain de la chaîne de traitement électronique n'a pas bougé.

Le calcul des valeurs VX, V1 et V2 consiste par exemple à calculer la valeur moyenne des échantillons numériques (respectivement $V_{x,i}$, $V_{1,i}$ $V_{2,i}$) par simple intégration numérique. D'autres méthodes de calcul de VX, V1 et V2 à partir des échantillons numériques $V_{x,i}$, $V_{1,i}$ $V_{2,i}$ peuvent être envisagées par l'homme du métier.

De préférence, afin d'obtenir une meilleure estimation de chacune des grandeurs VX, V1, V2, en réduisant au mieux leur écart type, les phases 0 à 2 et le calcul de Tx au moyen de la formule (3) sont répétés successivement N fois, ce qui permet d'obtenir une valeur moyenne de TX plus précise. Par exemple, avec une fréquence d'échantillonnage Fe de 1kHz, un nombre d'échantillons acquis pendant chaque phase 0 à 2 valant 50, et un nombre d'itérations N des phases 0 à 2 valant 40, on peut effectuer une mesure de température moyenne TX environ toutes les 6 secondes.

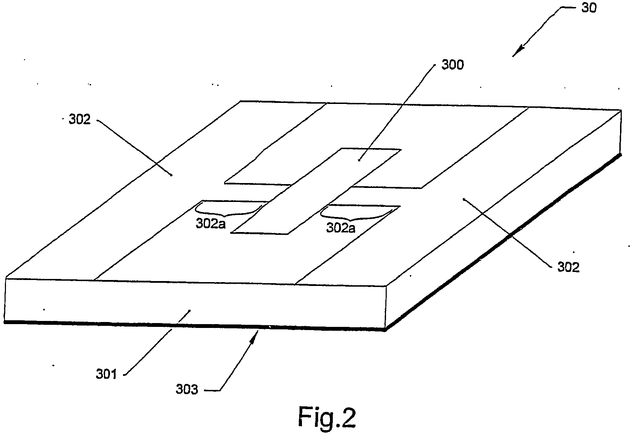

Exemple de réalisation la charge 30 - Figure 2

On a représenté sur la figure 2, un exemple préféré de réalisation d'une charge résistive 30 pouvant être utilisée pour réaliser la source 3 de bruit thermique.

D'une manière générale, et quelle que soit la structure de cette charge, il est préférable que la charge 30 présente une très faible inertie thermique, ce qui permet avantageusement d'obtenir des temps rapides de montée en température (pour atteindre température T2 lorsque la source de courant 31 débite dans la charge 30) et de descente en température (pour atteindre la température T1 lorsque la source de courant 31 ne débite plus dans la charge 30). Il est important que ces temps de montée et de descente en température soient faibles, afin de réduire les durées transitoires entre chaque phase précitée 0 à 2. Cela permet également de réduire avantageusement la consommation électrique de la source 31.

De préférence, l'inertie thermique de la charge résistive 30 est suffisamment faible pour que le temps de montée ou descente en température de source de bruit thermique entre les deux températures de référence T1 et T2 est inférieur à 50ms et de préférence inférieur à 25ms.

Le choix des températures de référence T1 et T2 dépend de l'application visée par le thermomètre radiométrique. De préférence, mais non nécessairement, afin de réduire les erreurs de mesure de température Tx, l'homme du métier fixera les températures de référence T1 et T2 de telle sorte que la température TX mesurée soit comprise entre T1 et T2. De manière non limitatif de l'invention, lorsque le thermomètre radiométrique est conçu pour mesurer la température corporelle d'un corps humain, on fixera par exemple T1 à environ 10°C et T2 à environ 50°C, soit une différence de température ΔT (ΔT= T2- T1) de l'ordre de 40°C.

En référence à la figure 2, dans un exemple préféré de réalisation, la charge résistive 30 comporte une résistance 300 réalisée sous la forme d'une couche de NiCr, qui est déposée sur la face supérieure d'un substrat de verre 301. Sur la face inférieure du substrat 301, est en outre déposée une couche de métallisation 303, par exemple en or.

Pour la connexion électrique de la résistance 300, des plots de métallisation 302, par exemple en or, sont réalisés par dépôt sur la face supérieure du substrat 301. Les accès continus 302a de ces plots 302 sont conçus afin d'augmenter la résistance thermique de la liaison avec la résistance 300, ce qui permet d'éviter la création de puits thermiques et permet de dissiper la puissance électrique uniquement au sein de la résistance 300.

A titre d'exemple non limitatif de l'invention, la résistance 300 présentait une résistance carrée d'environ 100 Ohms. La source de courant 31 était conçue pour débiter un courant d'intensité I0 égale à 15mA. Le temps de montée en température ou de descente en température, de la charge résistive 30 valait environ 20ms, pour une différence de température ΔT (ΔT= T2- T1) de l'ordre de 40°C.

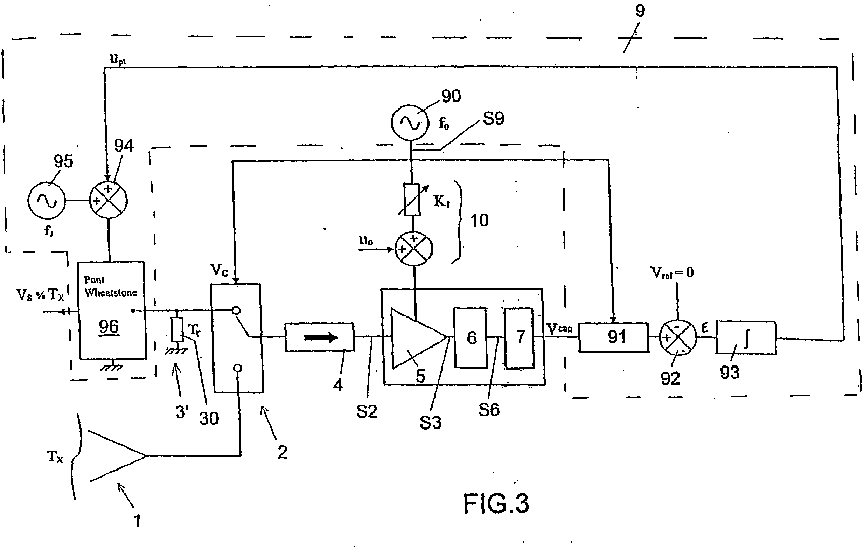

On a représenté sur la figure 3, une autre variante de réalisation d'un thermomètre radiométrique de l'invention. Dans cette variante de réalisation, et de manière identique à ce qui a été décrit pour la figure 1, on retrouve la mise en oeuvre d'une antenne 1, d'un commutateur 2 à deux positions, d'une ligne unidirectionnelle 4 (isolateur), des moyens de préamplification 5 du signal S2 transitant par la ligne unidirectionnelle 4, des moyens 6 de type superhétérodyne, permettant une transposition de fréquences du signal préamplifié S3 et délivrant un signal S6, et des moyens d'amplification 7 à gain variable et à commande automatique de gain, pour l'amplification du signal S6. Ces moyens 1, 2, 4, 5, 6 et 7 sont identiques à ceux de la figure 1. Dans une autre variante, les moyens 6 de transposition de fréquences de type superhétérodyne pourraient être supprimés.

Dans cette variante, le thermomètre radiométrique comporte également une source de bruit thermique 3', qui est différente de celle de la figure 1 et les moyens 9 de mesure de température Tx à partir du signal de commande automatique de gain Vcag sont différents des moyens 8 mis en oeuvre pour la variante la figure 1.

Dans cette variante de la figure 3, les moyens de mesure 9 comportent un générateur basse fréquence 90 qui délivre un signal de commande S9 de fréquence $f_0$, et qui commande le commutateur 2 au moyen de ce signal. Le commutateur 2 se connecte ainsi au rythme de la fréquence $f_0$, alternativement sur l'antenne 1 et sur la source de bruit thermique 3'. Cette source de bruit thermique 3' comporte une charge résistive 30 de valeur ohmique **$R_{PT}$**, par exemple 50 Ohms.

En première approximation et en utilisant une antenne 1 adaptée au corps à investiguer, l'amplitude du signal Vcag est :

$$(4) \quad Vcag = g(Tx - Tr)$$

où g est le gain de la chaîne d'amplification du signal délivré par l'antenne.

La fréquence $f_0$ est choisie de manière à s'affranchir du bruit en 1/f des moyens de préamplification 5. Il suffit pour le choix de cette fréquence $f_0$ de se placer au-delà du « flicker noise », qui par exemple se situe aux environs du kHz lorsque le matériau utilisé pour réaliser les moyens de préamplification 5 est le silicium.

Dans la variante de réalisation de la figure 3, et à la différence du fonctionnement de la variante de la figure 1 précédemment décrite, on cherche à obtenir un signal de commande automatique de gain Vcag nul (Vcag=0), ce qui permet avantageusement d'obtenir Tx=Tr (cf équation (4)), quelles que soient les fluctuations du gain g.

Pour ce faire, on agit sur la température Tr de la charge résistive, en en lui appliquant une tension continue Upt obtenue à partir du signal de commande automatique de gain Vcag. Ainsi, dans cette variante de réalisation, la température Tr de la charge résistive 30 sert à la fois de température de bruit de référence, et permet la mesure de la température Tx du corps sous investigation.

Plus particulièrement, le signal de commande automatique gain Vcag est détecté de manière synchrone à la fréquence $f_0$ au moyen du signal S9 (figure 3 - moyens de détection synchrone 91), puis est comparé à une tension de référence nulle (Vréf =0) au moyen d'un comparateur 92. Le signal d'erreur ε en sortie du comparateur 92 est intégré au moyen d'un intégrateur 93. Cet intégrateur 93 peut selon le cas être de type linéaire ou non linéaire.

La tension continue Upt appliquée à la charge résistive 30 correspond au signal de sortie de l'intégrateur 93, ce qui a pour conséquence de faire dissiper par la charge résistive 30 une certaine puissance P, et ainsi, au travers de sa résistance thermique Rth, d'élever sa température Tr de δT, soit :

$$(5)\ Tr = T0 + \delta T$$

$$(6)\ \delta T = Rth.P$$

$$(7)\ P = Rth.\frac{(Upt)^2}{Rpt}$$

Lorsqu'un intégrateur linéaire 93 est utilisé, la constante de temps $\tau$ de cet intégrateur est constituée d'une résistance R et d'un condensateur C fixe. Le choix de cette constante de temps dépend de la précision souhaitée de la mesure. Lors d'une mesure de température, il est préférable d'attendre une durée au moins égale à $4\tau$, afin d'obtenir la valeur finale de la mesure de température à 99%.

Pour mesurer la température Tr de la charge résistive 30, celle-ci est placée dans un pont Wheastone 96, lequel est alimenté (additionneur 94) à la fois par une tension alternative Vp, à la fréquence $f_1$, délivrée par un générateur 95, et par la tension continue Upt issue de l'intégrateur 93.

La tension alternative Vp, à la fréquence $f_1$, permet une détection synchrone du déséquilibre du pont Wheastone 96, et permet ainsi d'obtenir en sortie du pont Wheastone 96, une tension Vs proportionnelle à la température Tr de la charge résistive 30. Sachant par ailleurs que la tension continue Upt issue de l'intégrateur 93 permet de rendre nul le signal Vcag, la tension Vs en sortie du pont Wheastone 96 est proportionnelle à la température Tx du corps investigué (cf équation (4)).

De préférence, mais non nécessairement, le thermomètre comporte un moyen 10 d'équilibrage entre la voie antenne et celle de la référence (source de bruit thermique 3'). En effet lorsque l'antenne 1 est remplacée par une charge résistive de même valeur et portée à la même température que la charge résistive 30, le signal Vcag devrait être nul. Or l'isolateur 4 n'étant pas parfait, le facteur de bruit des moyens de préamplification 5 varie selon que le commutateur 2 se trouve sur la voie antenne ou sur la voie référence. Pour pallier ce problème, on agit sur le gain de ces moyens de préamplification 5 en réglant leur tension d'alimentation $U_0$ par l'adjonction d'une fraction du signal de commande S9 du commutateur 2 via une résistance réglable K1, de type potentiomètre.

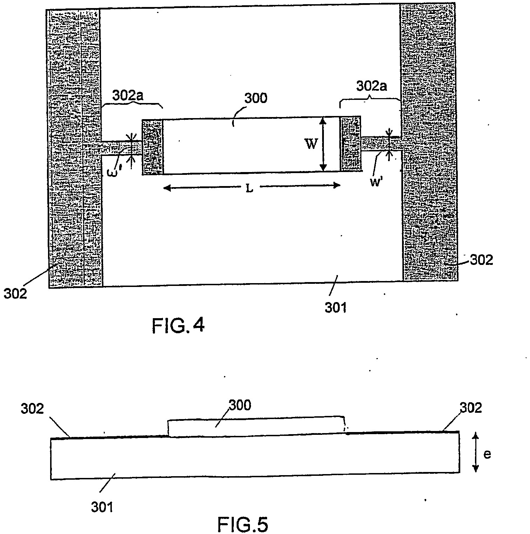

On a représenté sur les figures 4 et 5, un exemple préféré de réalisation d'une charge résistive 30 adaptée pour la variante de la figure 3.

Cette charge résistive 30 est constituée par une résistance 300 réalisée en déposant une fine couche de platine (Pt) sur un substrat 301 d'épaisseur e. Les dimensions L, W sont déterminées afin d'obtenir la valeur de résistance $R_{PT}$ recherchée.

Pour la connexion électrique de la résistance 300, des plots de métallisation 302, par exemple en or, sont réalisés par dépôt sur la face supérieure du substrat 301. Les accès continus 302a en or de ces plots 302 en contact avec la résistance 300 sont conçus (faible largeur W) afin d'augmenter la résistance thermique de la connexion et ainsi d'éviter à la chaleur dissipée dans la résistance 300 de s'échapper.

Le matériau et l'épaisseur e du substrat 301 sont choisis de manière à obtenir une grande variation de température de la résistance pour une faible puissance électrique dissipée. Pour le substrat 301, on utilise ainsi de préférence un matériau à faible conductivité thermique, et par exemple du quartz.

Le thermomètre radiométrique de l'invention peut être utilisé dans toutes les applications de mesure non invasive de température d'un corps, quels que soit la structure et le ou les matériaux constitutifs de ce corps. Par exemple, et de manière non exhaustive et non limitative de l'invention, le thermomètre radiométrique de l'invention peut être utilisé dans le domaine médical pour une mesure non invasive de la température de tissus biologiques, et notamment du corps humain, ou dans le domaine agroalimentaire pour une mesure non invasive de la température d'aliments.

## Revendications

1. Thermomètre radiométrique comportant un capteur (1) de microondes et des moyens électroniques de traitement du signal électrique délivré par ledit capteur, dans lequel lesdits moyens électroniques comportent des moyens de préamplification (5) du signal électrique (S1) délivré par le capteur (1) de microondes, des moyens d'amplification (7) à gain variable et à commande automatique de gain, **caractérisé en ce que** lesdits moyens d'amplification à gain variable et à commande automatique de gain permettent l'amplification du signal délivré par les moyens de préamplification (5), lesdits moyens d'amplification (7) comportant un signal de commande automatique de gain (Vcag) qui permet l'ajustement automatique du gain à partir du signal de sortie (S7) des moyens d'amplification, et des moyens électroniques (8 ou 9) de mesure de température permettant une mesure de température à partir dudit signal de commande automatique de gain (Vcag).

2. Thermomètre radiométrique selon la revendication 1, **caractérisé en ce que** les moyens d'amplification (7) à gain variable et à commande automatique de gain comportent un amplificateur logarithmique (70).

3. Thermomètre radiométrique selon la revendication 1 ou 2, **caractérisé en ce qu'**il comporte une source de bruit thermique (3) comportant une charge résistive (30) associée à un générateur de courant (31) qui est commandé par les moyens électroniques (8) de mesure de température, et qui est apte à débiter un courant (I0) dans la charge résistive (30), et un commutateur (2), qui est commandé par les moyens électroniques (8) de mesure de température, et qui permet de relier l'entrée des moyens de préamplification (5) soit à la sortie du capteur de microondes (1), soit à la source de bruit thermique (3), et **en ce que** les moyens électroniques (8) de mesure de température sont conçus pour commander la source de courant (31) de manière à ce que la charge résistive (30) puisse être portée à deux températures de référence différentes : une première température de référence (T1) en l'absence de courant dans la charge résistive (30), et une deuxième température de référence (T2) lorsque la charge résistive (30) est traversée par le courant débité par la source de courant (31).

4. Thermomètre radiométrique selon la revendication 3, **caractérisé en ce que** les moyens électroniques (8) de mesure de température sont conçus pour effectuer une mesure de température en mettant en oeuvre les trois phases successives suivantes :

Phase 0 :     commande du commutateur (2) afin de relier la sortie du capteur de microondes (1) à l'entrée des moyens de préamplification (5), et échantillonnage pendant une durée t0 prédéfinie du signal de commande automatique de gain (Vcag)

Phase 1 :     commande du commutateur (2) afin de relier la source de bruit thermique (3) à l'entrée des moyens de préamplification (5), et échantillonnage pendant une durée t1 prédéfinie du signal de commande automatique de gain (Vcag), la source de courant ne débitant pas de courant dans la charge résistive (30) de la source de bruit thermique (3),

Phase 2 :     commande du générateur de courant (31) de manière à ce que celui-ci débite dans la charge résistive (30) de la source de bruit thermique (3) un courant continu d'intensité constante I0, et échantillonnage pendant une durée t2 prédéfinie du signal de commande automatique de gain (Vcag).

5. Thermomètre radiométrique selon la revendication 4, **caractérisé en ce que** les moyens électroniques (8) de mesure de température sont conçus pour calculer une valeur VX à partir des échantillons $V_{x,i}$ issus de l'échantillonnage de la première phase (phase 0), une valeur V1 à partir des échantillons $V_{1,i}$ issus de l'échantillonnage de la deuxième phase (phase 1), et une valeur V2 à partir des échantillons $V_{2,i}$ issus de l'échantillonnage de la troisième phase (phase 2), et pour calculer une température Tx à partir des valeurs VX, V1 et V2, et des deux températures de référence T1 et T2 de la source de bruit thermique.

6. Thermomètre radiométrique selon la revendication 5, **caractérisé en ce que** les moyens électroniques (8) de mesure de température sont conçus pour calculer une température Tx au moyen de la formule suivante : Tx=T1+ (T2-T1).(VX-V1)/(VX-V2).

7. Thermomètre radiométrique selon la revendication 5 ou 6, **caractérisé en ce que** les moyens électroniques (8) de mesure de température sont conçus pour réitérer les trois phases 0 à 2 plusieurs fois, et pour calculer une température moyenne à partir des valeurs de température TX calculées pour chaque itération.

8. Thermomètre radiométrique selon l'une des revendications 3 à 7, **caractérisé en ce que** la charge résistive (30) de la source de bruit thermique (3) comporte une résistance constituée par une couche de NiCr déposée sur un substrat en verre, et deux plots de métallisation déposés sur ledit substrat et en contact avec ladite couche de NiCr.

9. Thermomètre radiométrique selon l'une des revendications 3 à 8, **caractérisé en ce que** le temps de montée ou descente en température de source de bruit thermique entre les deux températures de référence T1 et T2 est inférieur à 50ms et de préférence inférieur à 25ms.

**10.** Thermomètre radiométrique selon la revendication 1 ou 2, **caractérisé en ce que** qu'il comporte une source (3') de bruit thermique et un commutateur (2), qui permet de relier, à une fréquence prédéfinie ($f_0$), l'entrée des moyens de préamplification (5) soit à la sortie du capteur de microondes (1), soit à la source de bruit thermique (3'), et **en ce que** les moyens électroniques (9) de mesure de température comportent des moyens de commande (91, 92, 93) permettant de faire varier automatiquement la température (Tr) de la source (3') de bruit thermique à partir du signal de commande automatique de gain (Vcag), et des moyens (95, 96) de mesure de la température (Tr) de la source (3') de bruit thermique.

**11.** Thermomètre radiométrique selon la revendication 10, **caractérisé en ce que** les moyens de commande (91, 92, 93) de la source (3') de bruit thermique sont aptes à faire varier automatiquement la température (Tr) de la source (3') de bruit thermique de manière à rendre nulle signal de commande automatique de gain (Vcag).

**12.** Thermomètre radiométrique selon la revendication 11, **caractérisé en ce que** la source (3') de bruit thermique comporte une charge résistive (30), et en ce les moyens de commande (91, 92, 93) de la source (3') de bruit thermique comportent un comparateur (92) qui délivre un signal d'erreur ($\varepsilon$) à partir du signal de commande automatique gain (Vcag), et un intégrateur (93) qui délivre en sortie une tension continue (Upt) appliquée à la charge résistive (30).

**13.** Thermomètre radiométrique selon l'une des revendications 10 à 12, **caractérisé en ce que** les moyens (95, 96) de mesure de la température (Tr) de la source (3') de bruit thermique comportent un pont Wheastone (96) permettant d'obtenir une tension de sortie (Vs) proportionnelle à la température (Tr) de la source de bruit thermique (3').

**14.** Thermomètre radiométrique selon l'une des revendications 10 à 13, **caractérisé en ce qu'**il comporte un moyen (10) d'équilibrage entre la la voie correspondant à la sortie du capteur de microondes (1), et la voie correspondant à la source de bruit thermique (3').

**15.** Thermomètre radiométrique selon l'une des revendications 10 à 14, **caractérisé en ce que** la source (3') de bruit thermique comporte une charge résistive (30) constituée par une couche de Platine déposée sur un substrat à faible conductivité thermique de type quartz et deux plots de métallisation déposés sur ledit substrat et en contact avec ladite couche de Platine.

**Claims**

**1.** Radiometric thermometer comprising a microwave sensor (1) and electronic means for processing the electrical signal delivered by said sensor, wherein said electronic means comprise means (5) for preamplifying the electrical signal (S1) delivered by the microwave sensor (1), variable-gain amplification means (7) with automatic gain control, **characterized in that** said variable-gain amplification means with automatic gain control allow the amplification of the signal delivered by the pre-amplification means (5), said amplification means (7) comprising an automatic gain command signal (Vcag) that allows the gain to be automatically adjusted on the basis of the signal output (S7) by the amplification means, and electronic temperature measurement means (8 or 9) for allowing temperature to be measured on the basis of said automatic gain command signal (Vcag).

**2.** Radiometric thermometer according to claim 1, **characterised in that** the variable-gain amplification means (7) with automatic gain control comprise a logarithmic amplifier (70).

**3.** Radiometric thermometer according to claim 1 or 2, **characterised in that** it comprises a thermal noise source (3) comprising a resistive load (30) associated with a current generator (31), which is controlled by the electronic temperature measurement means (8) and which is capable of supplying the resistive load (30) with a current (I0), and a switch (2), which is controlled by the electronic temperature measurement means (8) and which enables the input of the pre-amplification means (5) to be connected either to the output of the microwave sensor (1) or to the thermal noise source (3), and **in that** the electronic temperature measurement means (8) are designed to control the current source (31) in such a manner that the resistive load (30) can be brought up to two different reference temperatures: a first reference temperature (T1) in the absence of a current in the resistive load (30), and a second reference temperature (T2) when the resistive load (30) is supplied with the current delivered by the current source (31).

**4.** Radiometric thermometer according to claim 3, **characterised in that** the electronic temperature measurement means (8) are designed to carry out a temperature measurement by implementing the following three successive phases:

Phase 0: control of the switch (2) so as to connect the output of microwave sensor (1) to the input of the pre-amplification means (5), and sampling during a predefined duration t0 of the automatic gain command signal (Vcag),

Phase 1: control of the switch (2) so as to connect the thermal noise source (3) to the input of the pre-amplification means (5), and sampling during a predefined duration t1 of the automatic gain command signal (Vcag), the current source not supplying the resistive load (30) of the thermal noise source (3) with a current,

Phase 2: control of the current generator (31) such that the latter supplies the resistive load (30) of the thermal noise source (3) with a continuous current of a constant intensity I0, and sampling during a predefined duration t2 of the automatic gain command signal (Vcag).

5. Radiometric thermometer according to claim 4, **characterised in that** the electronic temperature measurement means (8) are designed to calculate a value VX from the $V_{x,i}$ samples from the sampling of the first phase (phase 0), a value V1 from the $V_{1,i}$ samples from the sampling of the second phase (phase 1), and a value V2 from the $V_{2,i}$ samples from the sampling of the third phase (phase 2), and to calculate a temperature Tx from the values VX, V1 and V2, and from the two reference temperatures T1 and T2 of the thermal noise source.

6. Radiometric thermometer according to claim 5, **characterised in that** the electronic temperature measurement means (8) are designed to calculate a temperature Tx by means of the following formula:

$$Tx = T1 + (T2 - T1) \cdot (VX - V1)/(VX - V2).$$

7. Radiometric thermometer according to claim 5 or 6, **characterised in that** the electronic temperature measurement means (8) are designed to repeat the three phases 0 to 2 several times and to calculate a mean temperature from the temperature values Tx calculated at each iteration.

8. Radiometric thermometer according to one of claims 3 to 7, **characterised in that** the resistive load (30) of the thermal noise source (3) comprises a resistance constituted by a layer of NiCr deposited on a glass substrate, and two metallisation contacts deposited on said substrate and in contact with said layer of NiCr.

9. Radiometric thermometer according to one of claims 3 to 8, **characterised in that** the temperature increase or decrease times of the thermal noise source between the two reference temperatures T1 and T2 is less than 50ms and preferably less than 25ms.

10. Radiometric thermometer according to claim 1 or 2, **characterised in that** it comprises a thermal noise source (3') and a switch (2) that, at a predefined frequency ($f_0$), enables the input of the pre-amplification means (5) to be connected either to the output of the microwave sensor (1) or to the thermal noise source (3'), and **in that** the electronic temperature measurement means (9) comprise control means (91, 92, 93) enabling the temperature (Tr) of the thermal noise source (3') to be automatically adjusted on the basis of the automatic gain command signal (Vcag), and means (95, 96) for measuring the temperature (Tr) of the thermal noise source (3').

11. Radiometric thermometer according to claim 10, **characterised in that** the control means (91, 92, 93) of the thermal noise source (3') are capable of automatically adjusting the temperature (Tr) of the thermal noise source (3') so as to make the automatic gain command signal (Vcag) zero.

12. Radiometric thermometer according to claim 11, **characterised in that** the thermal noise source (3') comprises a resistive load (30), and **in that** the control means (91, 92, 93) of the thermal noise source (3') comprise a comparator (92), which supplies an error signal output ($\varepsilon$) from the automatic gain command signal (Vcag), and an integrating circuit (93), which at the output delivers a continuous voltage (Upt) applied to the resistive load (30).

13. Radiometric thermometer according to one of claims 10 to 12, **characterised in that** the temperature (Tr) measurement means (95, 96) of the thermal noise source (3') comprise a Wheatstone bridge (96) enabling an output voltage (Vs) to be obtained that is proportional to the temperature (Tr) of the thermal noise source (3').

**14.** Radiometric thermometer according to one of claims 10 to 13, **characterised in that** it comprises a balancing means (10) between the path corresponding to the output of the microwave sensor (1) and the path corresponding to the thermal noise source (3').

**15.** Radiometric thermometer according to one of claims 10 to 14, **characterised in that** the thermal noise source (3') comprises a resistive charge (30) constituted by a platinum layer deposited onto a quartz-type substrate with a low thermal conductivity and two metallisation contacts deposited onto said substrate and in contact with said layer of platinum.

**Patentansprüche**

**1.** Radiometrisches Thermometer mit einem Mikrowellensensor (1) und elektronischen Verarbeitungsnnitteln zum Verarbeiten des von dem Sensor ausgegebenen elektrischen Signals, wobei die elektronischen Mittel Vorverstärkungsmittel (5) für das von dem Mikrowellensensor (1) ausgegebene elektrische Signal (S1) und Verstärkungsmittel (7) mit veränderlicher Leistung und automatischer Verstärkungsregelung aufweisen, **dadurch gekennzeichnet, dass** die Verstärkungsmittel mit veränderlicher Leistung und automatischer Verstärkungsregelung die Verstärkung des von den Vorverstärkungsmitteln (5) ausgegebenen Signals gestatten, wobei die Verstärkungsmittel (7) ein Steuersignal zur automatischen Verstärkungsregelung (Vcag) aufweisen, welches die automatische Verstärkungsanpassung ausgehend von dem Ausgangssignal (S7) der Verstärkungsmittel gestattet, sowie elektronische Temperaturmessmittel (8 oder 9), die ein Messen der Temperatur ausgehend von dem Signal zur automatischen Verstärkungsregelung (Vcag) gestatten.

**2.** Radiometrisches Thermometer nach Anspruch 1, **dadurch gekennzeichnet, dass** die Verstärkungsmittel (7) mit veränderlicher Leistung und automatischer Verstärkungsregelung einen logarithmischen Verstärker (70) aufweisen.

**3.** Radiometrisches Thermometer nach Anspruch 1 oder 2, **dadurch gekennzeichnet, dass** es eine Wärmerauschquelle (3) mit einer resistiven Last (30) aufweist, der ein Stromerzeuger (31) zugeordnet ist, welcher über die elektronischen Temperaturmessmittel (8) gesteuert wird und dazu in der Lage ist, einen Strom (I0) in die resistive Last (30) zu liefern, sowie einen Schalter (2), der über die elektronischen Temperaturmessmittel (8) gesteuert wird und gestattet, den Eingang der Vorverstärkungsmittel (5) entweder mit dem Ausgang des Mikrowellensensors (1) oder mit der Wärmerauschquelle (3) zu verbinden, und dass die elektronischen Temperaturmessmittel (8) dazu ausgelegt sind, die Stromquelle (31) so zu steuern, dass die resistive Last (30) auf zwei unterschiedliche Bezugstemperaturen gebracht werden kann, nämlich auf eine erste Bezugstemperatur (T1) bei ausbleibendem Strom in der resistiven Last und auf eine zweite Bezugstemperatur (T2), wenn die resistive Last (30) von einem von der Stromquelle (31) gelieferten Strom durchflossen wird.

**4.** Radiometrisches Thermometer nach Anspruch 3, **dadurch gekennzeichnet, dass** die elektronischen Temperaturmessmittel (8) dazu ausgelegt sind, eine Temperaturmessung mit Durchlaufen der drei nachfolgenden Phasen nacheinander durchzuführen:

Phase 0: Ansteuern des Schalters (2), um den Ausgang des Mikrowellensensors (1) mit dem Eingang der Vorverstärkungsmittel (5) zu verbinden, und Abtasten des Signals zur automatischen Verstärkungsregelung (Vcag) für eine vorbestimmte Zeitdauer t0,
Phase 1: Ansteuern des Schalters (2), um die Wärmerauschquelle (3) mit dem Eingang der Vorverstärkungsmittel (5) zu verbinden, und Abtasten des Signals zur automatischen Verstärkungsregelung (Vcag) für eine vorbestimmte Zeitdauer t1, wobei die Stromquelle keinen Strom in die resistive Last (30) der Wärmerauschquelle (3) liefert,
Phase 2: Ansteuern des Stromerzeugers (31), so dass dieser in die resistive Last (30) der Wärmerauschquelle (3) einen Gleichstrom konstanter Stärke I0 liefert, und Abtasten des Signals zur automatischen Verstärkungsregelung (Vcag) für eine vorbestimmte Zeitdauer t2.

**5.** Radiometrisches Thermometer nach Anspruch 4, **dadurch gekennzeichnet, dass** die elektronischen Temperaturmessmittel (8) dazu ausgelegt sind, einen Wert VX ausgehend von Abtastwerten $V_{x,i}$ zu berechnen, die von der Abtastung aus der ersten Phase (Phase 0) stammen, einen Wert V1 ausgehend von Abtastwerten $V_{1,i}$ zu berechnen, die von der Abtastung aus der zweiten Phase (Phase 1) stammen, und einen Wert V2 ausgehend von Abtastwerten $V_{2,i}$ zu berechnen, die von der Abtastung aus der dritten Phase (Phase 2) stammen, und um eine Temperatur Tx ausgehend von den Werten VX, V1 und V2 und von den beiden Bezugstemperaturen T1 und T2 der Wärmerauschquelle zu berechnen.

**6.** Radiometrisches Thermometer nach Anspruch 5, **dadurch gekennzeichnet, dass** die elektronischen Temperaturmessmittel (8) dazu ausgelegt sind, eine Temperatur Tx mit Hilfe der nachfolgenden Formel zu berechnen: Tx=T1 + (T2-T1). (VX-V1)/(VX-V2).

**7.** Radiometrisches Thermometer nach Anspruch 5 oder 6, **dadurch gekennzeichnet, dass** die elektronischen Temperaturmessmittel (8) dazu ausgelegt sind, die drei Phasen 0 bis 2 mehrmals zu wiederholen und eine Durchschnittstemperatur ausgehend von den bei jeder Wiederholung errechneten Temperaturwerten TX zu berechnen.

**8.** Radiometrisches Thermometer nach einem der Ansprüche 3 bis 7, **dadurch gekennzeichnet, dass** die resistive Last (30) der Wärmerauschquelle (3) einen Widerstand aufweist, der aus einer auf ein Substrat aus Glas aufgebrachten NiCr-Schicht besteht, sowie zwei auf das Substrat aufgebrachte und mit der NiCr-Schicht in Kontakt stehende Metallisierungskontakte.

**9.** Radiometrisches Thermometer nach einem der Ansprüche 3 bis 8, **dadurch gekennzeichnet, dass** die Temperaturanstiegs- bzw. -Absinkzeit der Wärmerauschquelle zwischen den beiden Bezugstemperaturen T1 und T2 unter 50 ms und vorzugsweise unter 25 ms liegt.

**10.** Radiometrisches Thermometer nach Anspruch 1 oder 2, **dadurch gekennzeichnet, dass** es eine Wärmerauschquelle (3') und einen Schalter (2) aufweist, über welchen der Eingang der Vorverstärkungsmittel (5) entweder mit dem Ausgang des Mikrowellensensors (1) oder mit der Wärmerauschquelle (3') bei einer vorbestimmten Frequenz ($f_0$) verbunden werden kann, und dass die elektronischen Temperaturmessmittel (9) Steuermittel (91, 92, 93) aufweisen, mit denen die Temperatur (Tr) der Wärmerauschquelle automatisch variiert werden kann, und zwar ausgehend von dem Signal zur automatischen Verstärkungsregelung (Vcag), sowie Mittel (95, 96) zum Messen der Temperatur (Tr) der Wärmerauschquelle (3').

**11.** Radiometrisches Thermometer nach Anspruch 10, **dadurch gekennzeichnet, dass** die Steuermittel (91, 92, 93) für die Wärmerauschquelle (3') dazu geeignet sind, die Temperatur (Tr) der Wärmerauschquelle (3') automatisch zu variieren, so dass das Signal zur automatischen Verstärkungsregelung (Vcag) auf null gebracht wird.

**12.** Radiometrisches Thermometer nach Anspruch 11, **dadurch gekennzeichnet, dass** die Wärmerauschquelle (3') eine resistive Last (30) aufweist und dass die Steuermittel (91, 92, 93) für die Wärmerauschquelle (3') einen Komparator (92) aufweisen, der ausgehend von dem Signal zur automatischen Verstärkungsregelung (Vcag) ein Fehlersignal (E) ausgibt, sowie einen Integrator (93), der am Ausgang eine Gleichspannung (Upt) ausgibt, die auf die resistive Last (30) angelegt wird.

**13.** Radiometrisches Thermometer nach einem der Ansprüche 10 bis 12, **dadurch gekennzeichnet, dass** die Mittel (95, 96) zum Messen der Temperatur (Tr) der Wärmerauschquelle (3') eine Wheastone-Brücke (96) aufweisen, über die eine Ausgangsspannung (Vs) erhalten werden kann, die proportional zur Temperatur (Tr) der Wärmerauschquelle (3') ist.

**14.** Radiometrisches Thermometer nach einem der Ansprüche 10 bis 13, **dadurch gekennzeichnet, dass** es ein Abgleichmittel (10) zum Abgleich zwischen dem Pfad, der dem Ausgang des Mikrowellensensors (1) entspricht, und dem Pfad enthält, welcher der Wärmerauschquelle (3') entspricht.

**15.** Radiometrisches Thermometer nach einem der Ansprüche 10 bis 14, **dadurch gekennzeichnet, dass** die Wärmerauschquelle (3') eine resistive Last (30) aufweist, die aus einer Platin-Schicht besteht, die auf ein quarzartiges Substrat mit geringer Wärmeleitfähigkeit aufgebracht ist, sowie aus zwei auf das Substrat aufgebrachten und mit der Platin-Schicht in Kontakt stehenden Metallisierungskontakten.

Fig.1

**Fig.2**

FIG.3

EP 2 135 050 B1

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0158690 A